(19) Europäisches Patentamt

European Patent Office

Office européen des brevets

(11) Veröffentlichungsnummer: **0 315 015 B1**

(12) **EUROPÄISCHE PATENTSCHRIFT**

(45) Veröffentlichungstag der Patentschrift: **08.07.92**

(51) Int. Cl.⁵: **C08F 8/44**

(21) Anmeldenummer: **88117697.8**

(22) Anmeldetag: **25.10.88**

(54) **Verfahren zur Herstellung von Metallsalzen carboxylgruppenhaltiger Polymerer.**

(30) Priorität: **31.10.87 DE 3736997**

(43) Veröffentlichungstag der Anmeldung:
**10.05.89 Patentblatt 89/19**

(45) Bekanntmachung des Hinweises auf die
Patenterteilung:
**08.07.92 Patentblatt 92/28**

(84) Benannte Vertragsstaaten:
**AT BE CH DE ES FR GB IT LI NL SE**

(56) Entgegenhaltungen:
**EP-A- 0 005 363**
**EP-A- 0 106 991**

(73) Patentinhaber: **BASF Aktiengesellschaft**
**Carl-Bosch-Strasse 38**
**W-6700 Ludwigshafen(DE)**

(72) Erfinder: **Goertz, Hans-Helmut, Dr.**
**Am Wurmberg 11**
**W-6713 Freinsheim(DE)**
Erfinder: **Denzinger, Walter**
**Wormser Landstrasse 65**
**W-6720 Speyer(DE)**
Erfinder: **Raubenheimer, Hans-Jürgen**
**Benzstrasse 6**
**W-6834 Ketsch(DE)**

## Beschreibung

Die Erfindung betrifft ein Verfahren zur Herstellung von Metallsalzen von carboxylgruppenhaltigen Polymerisaten.

Wasserlösliche und wasserquellbare Salze von carboxylgruppenhaltigen Polymeren besitzen auf vielen Gebieten eine große Bedeutung. Beispielsweise werden schwach vernetzte Homo- und Copolymere von Acrylsäure, Methacrylsäure, Maleinsäure, Itaconsäure in Form ihrer Salze als Verdickungsmittel in kosmetischen und pharmazeutischen Zubereitungen, in Textildruckpasten, in Flüssigwaschmitteln und Reinigungsmitteln in steigenden Mengen eingesetzt. Auch unvernetzte carboxylgruppenhaltige Polymere mit niedrigem bis hohem Molekulargewicht finden vielfältige Einsatzmöglichkeiten als Dispergiermittel, Waschhilfsmittel, Textilschlichten, Wasserbehandlungsmittel, Hilfsmittel bei der Erdölförderung und vieles andere mehr. Im kosmetischen Bereich werden sie beispielsweise als Filmbilder in der Haarkosmetik, als Additive in Zahncremes und als Hilfsmittel in Gebißhaftcremes eingesetzt.

Die Herstellung der Polycarboxylate bzw. -sulfonate erfolgt üblicherweise derart, daß man die Monomeren in der Salzform, z.B. in Form des Natriumsalzes, in wäßriger Lösung polymerisiert und anschließend gegebenenfalls das polymere Salz durch Trocknung als Feststoff gewinnt.

Dieses einfache Verfahren setzt jedoch voraus, daß alle eingesetzten Monomeren in Wasser löslich und gegen Wasser unempfindlich sind und daß das in Wasser erhaltene Produkt gut gehandhabt werden kann. Diese Bedingungen sind in vielen Fällen nicht erfüllt. Beispielsweise sind eine ganze Reihe wichtiger und häufig eingesetzter Comonomerer wie Olefine, Acrylester, Vinylester, Vinylether und andere nicht wasserlöslich, so daß die Polymerisation zweckmäßigerweise in organischer Lösung erfolgt.

Im Falle schwach vernetzter Polycarboxylate, beispielsweise schwach vernetzter Polyacrylsäure bzw. ihrer Salze, ist eine Polymerisation in Wasser zwar möglich, jedoch ist das erhaltene steife Gel schwer zu handhaben. In diesem Fall greift man besser zum Verfahren der Fällungspolymerisation in einem inerten organischen Medium und gelangt so zu einer gut handhabbaren Suspension, aus der durch Trocknung ein pulverförmiges Produkt gewonnen werden kann.

In allen Fällen jedoch, in denen der Weg der Fällungs- oder Suspensionspolymerisation beschritten wird, erhält man die Polycarboxylate in Form der freien Säure bzw. der Anhydride. Eine Fällungspolymerisation der Salze, z.B. von Natriumacrylat, in einem organischem Lösungsmittel ist wegen mangelnder Löslichkeit des Monomeren nicht möglich. Die Salze werden daher bei unvernetzten Polymeren, die nach den geschilderten Verfahren hergestellt wurden, üblicherweise so gewonnen, daß das durch Fällungs-oder Suspensionspolymerisation erhaltene Polymerisat beispielsweise mit wäßriger Natronlauge neutralisiert wird, wobei im Falle polymerer Anhydride vorher oder gleichzeitig eine Öffnung des Anhydridrings erfolgt. Die Neutralisation und gegebenenfalls Hydrolyse mit wäßriger Lauge kann im unmittelbaren Anschluß an die Fällungspolymerisation in der Suspension erfolgen. Nach Abtrennen des organischen Lösungsmittels durch Phasentrennung oder Destillation erhält man die wäßrige Lösung des Polycarboxylates. Ein solches Vorgehen ist z.B. in US 3 297 657 für den Fall eines durch Fällungspolymerisation in Toluol/Petrolether hergestellten Copolymeren aus Maleinsäureanhydrid und Styrol beschrieben, in GB 15 11 652 für den Fall eines Copolymeren aus Maleinsäureanhydrid und Diisobuten.

Man kann aber auch das pulverförmige Produkt mit Wasser oder Lauge versetzen und so unmittelbar zur wäßrigen Lösung des Polycarboxylates kommen. Dies ist z.B. dann sinnvoll, wenn das bei der Fällungspolymerisation eingesetzte Lösungsmittel wegen eines hohen Siedepunktes aus dem Gemisch mit Wasser schlecht entfernt werden kann oder wenn das pulverförmige Produkt überhaupt durch ein anderes Herstellverfahren gewonnen würde.

Aus den in den hier beschriebenen Beispielen erhaltenen wäßrigen Polycarboxylat-Lösungen können, falls gewünscht, durch übliche Trocknungsverfahren die pulverförmigen Festprodukte gewonnen werden.

Im speziellen Fall der Calcium-Salze resultieren Schwierigkeiten bei der Herstellung aus wäßrigen Polycarboxylat-Lösungen und Calciumhydroxid daraus, daß das schwer wasserlösliche Calciumhydroxid beim Kontakt mit der wäßrigen Polycarboxylat-Lösung verklumpt und feste Aggregate bildet, die auch bei hohen Temperaturen nur sehr langsam in Lösung gehen.

In speziellen Fällen kann die Gewinnung der Metallsalze carboxylgruppenhaltiger Polymerer auch wie in EP 106991 beschrieben so erfolgen, daß ein Carboxyl- oder Anhydridgruppen enthaltendes Polymeres in fester Form mit geeigneten Metallsalzen, z.B. Alkalicarbonaten, gemischt wird. Nachteilig ist hierbei, daß das Polymere zunächst in fester Form gewonnen werden muß und zudem eine homogene Durchmischung und vollständige Reaktion im Feststoffgemisch nicht einfach zu gewährleisten ist.

Aufgabe der vorliegenden Erfindung ist es, ein möglichst einfach durchzuführendes technisches Verfahren zur Herstellung von Metallsalzen von carboxylgruppenhaltigen wasserlöslichen oder wasserquellbaren Polymeren zur Verfügung zu stellen.

Die Aufgabe der Erfindung wird durch ein Verfahren gelöst, bei dem man Polymere, die Carboxyl- und/oder Carbonsäureanhydridgruppen enthalten, mit pulverförmigen basischen Metallverbindungen umsetzt. Das verfahren ist dadurch gekennzeichnet, daß man die Umsetzung des Polymeren in Suspension in einem indifferenten Lösungsmittel, in dem das Polymere und sein Metallsalz unlöslich sind, durch Zugabe einer pulverförmigen basischen Metallverbindung, die nicht als Suspension vorliegt, durchführt und anschließend aufarbeitet.

Weitere Gegenstände der Erfindung sind der weiteren Beschreibung sowie den Beispielen zu entnehmen.

Die Polymeren, die erfindungsgemäß umgesetzt werden können, sind Homopolymere und Copolymere, die aus carboxylgruppenhaltigen und/oder carbonsäureanhydridgruppenhaltigen Monomeren und gegebenenfalls weiteren Monomeren aufgebaut sind. Carboxylgruppenhaltige Monomere sind beispielsweise Acrylsäure, Methacrylsäure, Crotonsäure, Maleinsäure, Itaconsäure, Citraconsäure und Fumarsäure. Acrylsäure- und methacrylsäurehaltige Polymere sind besonders bevorzugt. Carbonsäureanhydridgruppenhaltige Monomere sind Maleinsäureanhydrid, Itaconsäureanhydrid und Citraconsäureanhydrid. Maleinsäureanhydridhaltige Polymere sind besonders bevorzugt.

Als Comonomere kommen solche in Frage, die sich mit den carboxylgruppenhaltigen bzw. anhydridgruppenhaltigen Monomeren copolymerisieren lassen. Es kommen insbesondere in Frage Olefine mit 2 bis 30 Kohlenstoffatomen, verzweigt oder unverzweigt, wie Ethylen, Propylen, Buten-1, Buten-2, Isobuten, 2,2,4-Trimethylpenten - ggf. als technisches Isomerengemisch, Dodecen-1, Vinylester von Monocarbonsäuren mit 2 bis 10 Kohlenstoffatomen wie Vinylacetat, Vinylpropionat und Vinylester von verzweigten Carbonsäuren, Alkylvinylether mit 1 bis 18 Kohlenstoffatomen im Alkylrest wie Methylvinylether, Ethylvinylether, Butylvinylether, Isobutylvinylether, 2-Ethylhexylvinylether und Octadecylvinylether, Vinylaromaten wie Styrol, 4-Methylstyrol und α-Methylstyrol, N-Vinylamide wie N-Vinylpyrrolidon, N-Vinylcaprolactam, N-Vinylformamid und N-Methyl-N-vinylacetamid, sulfonsäuregruppenhaltige Monomere wie Styrolsulfonsäure, Vinylsulfonsäure und Acrylamidomethylpropansulfonsäure sowie Vinylphosphonsäure.

Als Comonomere kommen auch solche in Betracht, die mehr als eine polymerisationsfähige Vinylgruppe enthalten wie z.B. Butandioldivinylether, Divinyldioxan, Divinylbenzol, Pentaerythrittriallylether, Butandioldiacrylat, Polyethylenglykoldiacrylat.

Bevorzugte Polymere, die erfindungsgemäß umgesetzt werden können, sind insbesondere schwach vernetzte Polyacrylsäure, (Alternierende) Copolymere von Maleinsäureanhydrid und Olefinen mit 2 bis 30 Kohlenstoffatomen wie insbesondere Ethylen, Isobuten, Diisobuten und Dodecen-1, ggf. vernetzt, (alternierende) Copolymere von Maleinsäureanhydrid mit Vinylestern von Carbonsäuren mit 2 bis 10 Kohlenstoffatomen wie insbesondere Vinylacetat und Vinylpropionat, ggf. vernetzt, alternierende Copolymere von Maleinsäureanhydrid mit Alkylvinylethern mit 1 bis 18 Kohlenstoffatomen im Alkylrest wie insbesondere Methylvinylether und Isobutylvinylether, ggf. vernetzt, Copolymere von Maleinsäureanhydrid und Styrol, ggf. vernetzt.

Erfindungsgemäß werden die carboxyl- bzw. carbonsäureanhydridgruppenhaltigen Polymeren in einer geeigneten indifferenten organischen Flüssigkeit suspendiert und umgesetzt. Beispielsweise kann man ein geeignetes Polymerisat durch Substanz-, Lösungs-, Fällungs- oder Suspensionspolymerisationherstellen, in eine feinteilige Pulverform überführen und dieses Pulver dann in einer indifferenten organischen Flüssigkeit suspendieren. Unter indifferent ist hierbei zu verstehen, daß die Flüssigkeit keine Reaktion mit dem suspendierten Polymeren eingeht beispielsweise mit dessen Carboxyl- oder Anhydridgruppen. Die suspendierten Teilchen der Polymeren haben vorteilhaft einen mittleren Teilchendurchmesser im Bereich von $10^{-5}$ bis $10^{-1}$ mm.

Welches organische Medium geeignet ist, kann im Einzelfall leicht ermittelt werden. Besonders geeignet sind geradkettige und verzweigte aliphatische und cycloaliphatische Kohlenwasserstoffe wie z.B. Pentan, Hexan, Heptan, Octan, Isooctan, Cyclohexan, Diethylcyclohexan und Dimethylcyclohexan, Aromaten wie Benzol, Toluol, o-Xylyl, m-Xylol, p-Xylol sowie deren technische Gemische, Ethylbenzol, Diethylbenzol, Methylethylbenzol, halogenierte Kohlenwasserstoffe wie Methylenchlorid, 1,1-Dichlorethan, 1,2-Dichlorethan, 1,1,1-Trichlorethan, 1,1,2-Trichlorethan, 1,1,2-Trichlorethylen, Perchlorethylen, 1,2-Dichlorpropan, 1-Chlorbutan, 1,1,2-Trichlor-1,2,2-trifluorethan, 1,1,1,2-Tetrachlor-2,2-difluorethan und 1,1,2,2-Tetrachlor-1,2-difluorethan. Geeignet sind außerdem Ester, die mindestens 5 C-Atome im Molekül enthalten und aus gesättigten aliphatischen Carbonsäuren und einwertigen gesättigten Alkoholen erhältlich sind. Dies sind beispielsweise Carbonsäurealkylester wie Ameisensäure-n-butylester, Ameisensäure-sec-butylester, Ameisensäureisobutylester, Ameisensäure-tert.-butylester, Essigsäure-n-propylester, Essigsäureisopropylester, Essigsäurebutylester, Essigsäure-sec.-butylester, Essigsäureisobutylester, Essigsäure-tert.-butylester, Essigsäurepentylester in den verschiedenen isomeren Formen, Propionsäureethylester, Propionsäure-n-propylester, Propionsäureisopropylester, Propionsäurebutylester in seinen isomeren Formen, Buttersäuremethylester, Buttersäureethylester, Buttersäurepropylester, Buttersäureisopropylester, Isobuttersäureethylester, Isobuttersäure-n-propylester, Isobuttersäureisopropylester. Besonders geeignet sind Essigsäure-n-propylester und Essigsäureisopropylester.

Erfindungsgemäß besonders bevorzugt ist ein Verfahren, bei dem die Suspension des geeigneten Polymeren unmittelbar bei dessen Herstellung anfällt. Dies ist der Fall, wenn die Polymerisation als Fällungs- oder Suspensionspolymerisation in organischen Medium durchgeführt wird. Hierfür sind die oben genannten Lösungsmittel besonders geeignet. Beispielsweise läßt sich schwach vernetzte Polyacrylsäure durch Fällungspolymerisation in Aromaten wie Benzol, Toluol oder Xylol oder in chlorierten Kohlenwasserstoffen wie Butylchlorid, Methylenchlorid, 1,2-Dichlorethan oder 1,1,1-Trichlorethan gewinnen. In den gleichen Lösungsmitteln kann auch eine Fällungspolymerisation im System Maleinsäureanhydrid/Vinylalkylether, beispielsweise Maleinsäureanhydrid/Vinylmethylether, durchgeführt werden. Die Copolymerisation von Maleinsäureanhydrid mit Diisobuten kann in einem Überschuß des Olefins als Suspensionspolymerisation erfolgen. Allen diesen Beispielen gemeinsam ist die Tatsache, daß das Polymere als feinteilige Suspension in einem organischen Medium anfällt.

Durch Zugabe einer pulverförmigen basischen Metallverbindung zu einer der oben beschriebenen Suspensionen erfolgt die Umsetzung zum entsprechenden Metallcarboxylat. Die basischen Metallverbindungen haben vorteilhaft einen mittleren Teilchendurchmesser im Bereich von $10^{-5}$ bis $10^{-1}$ mm.

Der Feststoffanteil der eingesetzten Suspensionen kann zwischen 5 und 70 Gew.-% liegen, wobei ein Bereich zwischen 15 und 60 Gew.-% bevorzugt ist. Im Laufe der Umsetzung wird im allgeinen keine nennenswerte Änderung in Aussehen und Rührverhalten der Suspension beobachtet. Sofern die Viskosität der Suspension jedoch zu stark ansteigt, kann mit Lösungsmittel verdünnt werden, zweckmäßigerweise mit dem gleichen, das bei der Herstellung der Suspension verwendet wurde. Infolge des unproblematischen Verhaltens der Reaktionsmischung werden zur Durchführung der Reaktion lediglich übliche Standardapparaturen benötigt. Die Zugabe der pulverförmigen Metallverbindung kann mittels einer Dosierschnecke erfolgen. Um elektrostatische Aufladung bei der Zugabe zu vermeiden, wird die Zugabe zweckmäßigerweise unter Inertgas, beispielsweise mittels einer Zellradschleuse, durchgeführt. Als eigentlicher Reaktionsbehälter ist ein üblicher Rührkessel geeignet, der zur nötigen Durchmischung des Inhalts mit Anker-, Blatt-, Impeller- oder Mehrstufenimpulsgegenstromrührer ausgestattet ist.

Der Ablauf der Umsetzung kann ggf. durch Temperaturerhöhung, beispielsweise bis zum Sieden des verwendeten inerten organischen Lösungsmittels, beschleunigt werden. Zweckmäßig arbeitet man zwischen Raumtemperatur und dem Siedepunkt des Lösungsmittels, jedoch unterhalb der Glastemperatur des Polymeren.

Die in der Suspension im allgemeinen herstellungsbedingt enthaltenen Schutzkolloide haben keinen Einfluß auf den Reaktionsablauf.

Erfindungsgemäß geeignete basische Metallverbindungen sind Oxide, Hydrogencarbonate, Carbonate und insbesondere Hydroxide. Die bevorzugten Metalle sind Natrium, Magnesium, Calcium und Aluminium. Die Zugabe der basischen Metallverbindung kann in einer Menge bis 1, vorzugsweise 0,1 bis 1 Äquivalent Metallverbindung pro Säuregruppe im Polymeren bzw. bis 2, vorzugsweise 0,2 bis 2 Äquivalenten Metallverbindung pro Anhydridgruppe im Polymeren erfolgen.

Sofern die Herstellung gemischter Salze gewünscht ist, können auch verschiedene Metallverbindungen, beispielsweise Calciumhydroxid und Natriumhydroxid zusammen oder nacheinander zugegeben werden. Die Metallverbindungen werden vorteilhaft in fein pulverisierter Form eingesetzt, um eine möglichst rasche und homogene Einmischung in die Suspension zu erzielen und die Reaktionszeit niedrig zu halten.

Die Trocknung der erhaltenen Suspension entweder unmittelbar oder nach Abtrennung eines Großteils der Flüssigkeit durch Filtration oder Zentrifigieren führt zu den pulverförmigen Metallsalzen der entsprechenden carboxylgruppenhaltigen Polymeren. Die Trocknung kann nach den üblichen Methoden erfolgen, beispielsweise mit Walzen-, Band-, Schaufel-, Sprüh-, oder Wirbelbett-Trockner. Daß eine Umsetzung zum entsprechenden Metallsalz erfolgt ist, gibt sich in vielen Fällen an der guten Wasserlöslichkeit bzw. - quellbarkeit der Produkte zu erkennen.

Ist das Endprodukt eine wäßrige Lösung des Metallsalzes des carboxylgruppenhaltigen Polymeren gewünscht, so kann nach erfolgter Umsetzung in Suspension Wasser zugegeben und das organische Lösungsmittel durch Phasentrennung, durch Destillation oder durch Austreiben mit Wasserdampf entfernt werden. Man gelangt so unmittelbar zur wäßrigen Lösung. Besonders vorteilhaft ist bei diesem Vorgehen im Anschluß an die erfindungsgemäße Umsetzung, daß keine Schaumprobleme auftreten, wie man sie beobachtet, wenn man polymere Anhydride in Suspension mit Wasser oder wäßriger Lauge versetzt und dann das Lösungsmittel austreibt. Der Vorteil kommt insbesondere bei hochmolekularen Produkten zum Tragen. Ein weiterer Vorteil ergibt sich bei der Herstellung von Erdalkalimetall-, speziell Calciumsalzen. Beim Versuch, eine wäßrige Polycarboxylatlösung mit Kalkmilch zum Salz umzusetzen bilden sich leicht harte Agglomerate, die auch bei längerem Kochen nur extrem langsam in Lösung gehen. Dieser unangenehme Effekt wird völlig vermieden, wenn erfindungsgemäß in organischer Suspension mit festem Calciumhydroxid umgesetzt wird und die Zugabe von Wasser erst anschließend erfolgt.

Die folgenden Beispiele sollen die Erfindung erläutern. Soweit Viskositäten angegeben sind, wurden sie mit einem Brookfield-Viskosimeter, Typ LVF, bei 25°C gemessen. K-Werte wurden an 1 %igen Lösungen bei 25°C nach Fikentscher bestimmt.

Beispiel 1

In einem 6 l-Rührautoklaven, der mit Rückflußkühler, Stickstoffeinleitungsrohr,Thermometer und zwei Dosiervorrichtungen versehen ist, wurden 1394 g 1,1,1-Trichlorethan, 500 g wasserfreie Acrylsäure und 4 g Pentaerythrittriallylether im schwachen Stickstoffstrom auf 55°C erhitzt. Nun wurde eine Initiatorlösung aus 0,5 g Dicyclohexylperoxidicarbonat in 80 ml 1,1,1-Trichlorethan bereitet. Nach Erreichen von 55°C im Rührautoklaven wurden 3,6 ml Initiatorlösung zugegeben. Nach 5 min fiel das Polymere in feiner Form aus, erkenntlich am Entstehen einer Trübung. Nun wurden über einen Zeitraum von 8 Stunden alle 15 min 1,8 ml Initiatorlösung zugesetzt. Mit fortschreitender Dauer der Polymerisation wurde die gebildete Suspension viskoser. Um sie gut rührbar zu halten, wurde nach und nach mit 1,8 Litern 1,1,1-Trichlorethan verdünnt. Nach 8 h Initiatorzugabe wurde die restliche Initiatorlösung auf einmal zugegeben und 1 h bei 74°C zum Sieden erhitzt. (Die Suspensionsteilchen hatten eine mittleren Durchmesser von 0,5 $\mu$m und waren zu Agglomeraten von 20 $\mu$m aggregiert). Nun wurde auf 60°C abgekühlt und innerhalb 30 min 250 g pulverisiertes Natriumhydroxid eines mittleren Teilchendurchmessers von 50 $\mu$m eingetragen und nochmals 2 h zum Sieden erhitzt. Nun wurde die viskose Suspension in einem Rotationsverdampfer bei Wasserstrahlvakuum und 70°C Badtemperatur bis zur Trockne eingedampft. Man erhielt ein sehr feines mehlartiges weißes Pulver, das nach Einrühren 0,3 %ig in Wasser ein glasklares strukturloses Gel mit einer Viskosität von 30 Pa.s ergab. Das Pulver kann als Verdicker für z.B. kosmetische Zubereitungen dienen.

Beispiel 2

In einem 2 l-Glasrührbehälter, der mit Rückflußkühler und Zulaufgefäßen ausgestattet ist, wurde eine Lösung von 125,6 g Maleinsäureanhydrid in 400 g Benzol auf 58°C erwärmt. Dann wurden 90 g Vinylmethylether in 350 g Benzol zugegeben, wobei schwaches Sieden einsetzte. Eine Lösung von 0,2 g 2,2'-Azobis (2,4-dimethylvaleronitril) diente als Zulauf. 6 ml des Zulaufs wurden zugegeben und 20 min gewartet. Dann wurde der restliche Zulauf innerhalb 5 h zugetropft. Während der ganzen Zeit wurde die Mischung bei schwachem Rückfluß gehalten, wobei der Siedepunkt von anfänglich etwa 50 bis 55°C auf 80°C anstieg. Nach beendeter Zugabe wurde noch eine Stunde bei 80°C gerührt und anschließend 200 ml Benzol abdestilliert. Es wurde eine viskose weiße Suspension erhalten. Eine kleine Probe wurde entnommen und getrocknet. Der mittlere Teilchendurchmesser des Pulvers betrug 0,05 $\mu$m. Der K-Wert des polymeren Anhydrid in Cyclohexanon betrug 98. Bei 60°C wurden 40 g Magnesiumhydroxid mit dem mittleren Teilchendurchmesser von 0,1 $\mu$m in die Suspension eingetragen und 1 h bei 60°C gerührt.

Anschließend wurden 800 ml Wasser zugesetzt und 4 Stunden bei 80°C gerührt. Danach wurde das Benzol mit Wasserdampf ausgetrieben, wobei nochmals mit 200 ml Wasser verdünnt wurde. Die erhaltene wäßrige Lösung wurde mit 14,5 g Natriumhydroxid in 300 ml Wasser versetzt. Der K-Wert des erhaltenen gemischten Magnesium/Natrium-Salzes in Wasser betrug 120.

Beispiel 3

Es wurde wie in Beispiel 2 polymerisiert. Der K-Wert des polymeren Anhydrids in Cyclohexanon betrug 90. In die Suspension wurden 52,4 g pulverisiertes Calciumhydroxid des Teilchendurchmessers 0,01 $\mu$m eingetragen und 1 h bei 60°C gerührt. Danach wurden 14,5 g pulverisiertes Natriumhydroxid des Teilchendurchmessers 50 $\mu$m zugegeben und eine weitere Stunde bei 60°C gerührt. Anschließend wurden 800 ml Wasser zugegeben und das Benzol mit Wasserdampf ausgetrieben. Die erhaltene klare Lösung des gemischten Calcium/Natrium-Salzes hatte einen Polymergehalt von 14,6 %. Der K-Wert in Wasser betrug 120. Das durch Trocknung erhältliche Festprodukt kann zur Formulierung von Gebißhaftmitteln dienen.

Beispiel 4

In einem 2 l-Glasrührbehälter mit Rückflußkühler, Stickstoffeinleitungsrohr, Thermometer und Dosiervorrichtungen wurden 571 g Toluol, 63,5 g Methylethylketon, 16 g Polystyrol vom Molgewicht 60 000, 200 g Maleinsäureanhydrid, 204 g Vinylisobutylether und 10 g Divinyldioxan im schwachen Stickstoffstrom auf 65°C erhitzt. Nun wurde eine Initiatorlösung aus 0,4 g 2,2'-Azobis(isobutyronitril) und 40 ml Toluol hergestellt. Dann wurden 4 ml dieser Lösung in den Rührbehälter gegeben. An einer Wärmetönung war der Beginn der Polymerisation zu erkennen. Nach 2,5 h bei 65°C wurden nochmals 4 ml Initiatorlösung zugesetzt und nach weiteren 15 min, da keine Reaktion mehr erkennbar war, die restliche Initiatorlösung und 1 h bei 80°C auspolymerisiert. (Mittlerer Durchmesser der Suspensionsteilchen 2-3 $\mu$m.) Nun wurden in die schwach viskose Polymersuspension 155 g pulverisiertes Natriumhydroxid des Teilchendurchmessers 50 $\mu$m innerhalb 30 min zugegeben und anschließend 2 h auf 80°C erhitzt. Die Suspension wird in einen Schaufeltrockner gegeben und das Lösungsmittel bei 80°C Badtemperatur und Wasserstrahlvakuum innerhalb 2 h abdestilliert. Es fiel ein leicht versintertes grobkörniges Pulver an, das nach Auflösen 1 %ig in Wasser eine schwach trübe hochviskose Lösung mit einer Viskosität von 16 Pa.s ergab. Es ist als Verdicker für Textildruckpasten geeignet.

Beispiel 5

In einem Rührautoklaven wie in Beispiel 1 wurden 1507,5 g Diisobuten (Isomerengemisch aus 80 Gew.-% 2,4,4-Trimethylpenten-1 und 20 Gew.-% 2,4,4-Trimethylpenten-2), 630 g Maleinsäureanhydrid und 5 g Polyvinylethylether vom K-Wert 50 (gemessen in Cyclohexanon) auf ca. 102°C zum Sieden erhitzt und dann eine Lösung von 13,5 g tert.-Butylper(2-ethylhexanoat) in 100 g Diisobuten innerhalb 4 Stunden zudosiert. Anschließend wurde noch eine Stunde nachpolymerisiert. Die erhaltene niedrigviskose weiße Suspension (Teilchendurchmesser 2 $\mu$m) wurde auf 80°C abgekühlt und innerhalb 30 min 385 g feinpulverisiertes Natriumhydroxid des Teilchendurchmessers 50 $\mu$m in den Autoklaven zudosiert und 2 Stunden bei 80°C nacherhitzt. Der Autoklaveninhalt wurde anschließend in einen Schaufeltrockner entleert und bei 80°C und Wasserstrahlvakuum innerhalb 3 Stunden getrocknet.

Das erhaltene Pulver löste sich in Wasser zu einer schwach trüben Lösung, die bei einem Feststoffgehalt von 25 % eine Viskosität von 40 mPa.s aufwies. Die Lösung kann als Dispergiermittel für Pigmente wie Zinkoxid oder Titandioxid in Wasser Verwendung finden.

Beispiel 7

100 g eines alternierenden Copolymeren aus Maleinsäureanhydrid und Vinylmethylether vom K-Wert 44 (gemessen in Cyclohexanon) mit einem mittleren Teilchendurchmesser von 0,05 $\mu$m wurde in einem 1-l-Glasrührgefäß in 400 g Toluol suspendiert. Dann wurden 64 g Kaliumhydrogencarbonat (Teilchendurchmesser 1 $\mu$m) zugegeben und 2 h zum Sieden erhitzt. Die feinteilige weiße Suspension wurde filtriert und der Filterkuchen bei 50°C im Wasserstrahlvakuum über Nacht getrocknet. Das erhaltene mehlige Pulver löste sich in kaltem Wasser. Eine 5 %ige Lösung in destilliertem Wasser hatte eine Viskosität von 18 mPa.s.

Beispiel 8

In einer 2-l-Glasapparatur, die mit Rührer, Rückflußkühler und Zulaufgefäßen ausgestattet war, wurde eine Lösung von 125,6 g Maleinsäureanhydrid in 400 g 1,1,1-Trichlorethan auf 60°C erwärmt. Dann wurde unter Rühren eine Lösung von 90 g Vinylmethylether in 350 g 1,1,1-Trichlorethan zugegeben, wobei schwaches Sieden einsetzte. Eine Lösung von 0,2 g 2,2′-Azobis(2,4-dimethylvaleronitril) in 50 g 1,1,1-Trichlorethan diente als Zulauf. 4 ml des Zulaufs wurden zugegeben und 20 min bei 60°C gerührt. Dann wurde der restliche Zulauf innerhalb 5 h zugetropft. Während der ganzen Zeit wurde die Mischung bei schwachem Sieden gehalten. Es wurde noch eine Stunde unter Rückfluß nachgerührt, anschließend 200 ml 1,1,1-Trichlorethan abdestilliert. Von der erhaltenen viskosen weißen Suspension wurde eine Probe entnommen und getrocknet (mittlerer Teilchendurchmesser 0,1 $\mu$m). Der K-Wert des Polymerisates in Cyclohexanon betrug 66. In die warme Suspension wurden 50 g fein pulverisiertes Calciumhydroxid (Teilchendurchmesser 0,01 $\mu$m) eingetragen und 1 Stunde bei 80°C gerührt; anschließend wurden 14,5 g pulverisiertes Natriumhydroxid (Teilchendurchmesser 50 $\mu$m.) eingetragen und eine weitere Stunde gerührt.

Die erhaltene Suspension wurde abfiltriert und der Filterkuchen bei 50°C im Wasserstrahlvakuum über Nacht getrocknet. Das Produkt ließ sich leicht in kaltem Wasser lösen. Der K-Wert in Wasser betrug 70.

Beispiel 9

In einer 6 l-Glasapparatur, die mit Rührer, Rückflußkühler und Zulaufvorrichtungen versehen war, wurden 750 g technisches Xylol, 3 g Polyvinylethylether vom K-Wert 50 (gemessen in Cyclohexanon) und 375 g Maleinsäureanhydrid in schwachem Stickstoffstrom auf 80°C erhitzt und bei 80°C innerhalb von 2 Stunden eine Lösung von 300 g Maleinsäureanhydrid in 300 g technischem Xylol, innerhalb von 3 Stunden 825 g wasserfreie Acrylsäure und innerhalb 4 Stunden eine Lösung von 12 g tert.-Butylper-2-ethylhexanoat in 300 g technischem Xylol zudosiert. Anschließend wurde das Reaktionsgut auf ca. 136°C bis zum Sieden erhitzt und anschließend innerhalb 1 Stunde eine Lösung von 12 g Ditertiärbutylperoxid in 150 g technischem Xylol zudosiert und noch 1 Stunde am Rückfluß nacherhitzt.

Eine Probe der erhaltenen Suspension (Teilchen von 1-5 μm Durchmesser, zu Agglomeraten von 50 μm Durchmesser aggregiert) wurde getrocknet. Der K-Wert des Polymerisates (gemessen in N,N-Dimethylformamid) betrug 30.

In die Suspension wurden bei 80°C innerhalb einer Stunde 480 g fein pulverisiertes Natriumhydroxid (Teilchendurchmesser 50 μm) eingetragen und eine Stunde bei dieser Temperatur gerührt, wobei nach und nach mit 1 l technischem Xylol verdünnt wurde.

Die erhaltene Suspension wurde in einen Schaufeltrockner gegeben und bei 80°C und Waserstrahlvakuum zu einem weißen Pulver getrocknet. Das Produkt löste sich leicht in Wasser. Die 25 %ige wäßrige Lösung hatte eine Viskosität von 46 mPa.s.

## Patentansprüche

1. Verfahren zur Herstellung von Metallsalzen von Carboxylgruppen enthaltenden Polymeren, bei dem man Polymere, die Carboxyl- und/oder Carbonsäureanhydridgruppen enthalten, mit pulverförmigen basischen Metallverbindungen umsetzt, dadurch gekennzeichnet, daß man die Umsetzung des Polymeren in Suspension in einem indifferenten Lösungsmittel, in dem das Polymere und seine Metallsalze unlöslich sind, durch Zugabe einer pulverförmigen basischen Metallverbindung die nicht als Suspension vorliegt, durchführt und anschließend aufarbeitet.

2. Verfahren nach Anspruch 1, dadurch gekennzeichnet, daß man die erhaltene Suspension des Metallsalzes trocknet.

3. Verfahren nach Anspruch 1, dadurch gekennzeichnet, daß man der Suspension des Metallsalzes Wasser zusetzt und das Lösungsmittel abdestilliert.

4. Verfahren nach den Ansprüchen 1 bis 3, dadurch gekennzeichnet, daß das Polymere durch Fällungs- oder Suspensionspolymerisation in dem indifferenten Lösungsmittel erhalten wurde, in dem die Umsetzung des Polymeren mit dem Metallsalz erfolgt.

## Claims

1. A process for preparing a metal salt of a carboxyl-containing polymer where a polymer with carboxylic acid or anhydride groups is reacted with a pulverulent basic metal compound, which comprises performing the reaction in suspension in an inert solvent in which the polymer and its metal salt are insoluble by adding a pulverulent basic metal compound which is not in the form of a suspension, and then working up.

2. A process as claimed in claim 1, wherein the resulting suspension of the metal salt is dried.

3. A process as claimed in claim 1, wherein water is added to the suspension of the metal salt and the solvent is distilled off.

4. A process as claimed in any of claims 1 to 3, wherein the polymer has been obtained by precipitation or suspension polymerization in the same inert solvent in which the reaction of the polymer with the metal salt takes place.

## Revendications

1. Procédé de préparation de sels métalliques de polymères contenant des groupements carboxyle, dans lequel on fait réagir des polymères, qui contiennent des groupements carboxyle ou anhydride carboxylique, avec des composés métalliques basiques en poudre, caractérisé en ce qu'on conduit la réaction du polymère en suspension dans un solvant inerte dans lequel le polymère et ses sels métalliques sont insolubles, par addition d'un composé métallique basique en poudre qui ne se présente pas sous forme de suspension, puis on procède à un traitement ultérieur.

2. Procédé selon la revendication 1, caractérisé en ce qu'on sèche la suspension du sel métallique obtenue.

3. Procédé selon la revendication 1, caractérisé en ce qu'on ajoute de l'eau à la suspension du sel métallique et on chasse le solvant par distillation.

4. Procédé selon l'une quelconque des revendications 1 à 3, caractérisé en ce que le polymère a été obtenu par polymérisation avec précipitation ou polymérisation en suspension dans le solvant inerte dans lequel s'effectue la réaction du polymère avec le composé métallique.